(19) Europäisches Patentamt / European Patent Office / Office européen des brevets

(11) **EP 2 698 508 A1**

(12) **EUROPEAN PATENT APPLICATION**

(43) Date of publication:
**19.02.2014 Bulletin 2014/08**

(51) Int Cl.:
*F01L 3/06* (2006.01)     *F02B 31/00* (2006.01)
*F02F 1/42* (2006.01)     *F02B 23/10* (2006.01)

(21) Application number: **12180846.3**

(22) Date of filing: **17.08.2012**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **MWM GmbH**
**68167 Mannheim (DE)**

(72) Inventors:
• **Bittner, Jürgen**
**68766 Hockenheim (DE)**

• **Böwing, Robert, Dr.**
**6020 Innsbruck (AT)**

• **Braun, Michael**
**69198 Schriesheim (DE)**

• **Schäfer, Friedrich**
**67480 Edenkoben (DE)**

(74) Representative: **Preuss, Udo**
**Kramer - Barske - Schmidtchen**
**Landsberger Strasse 300**
**80687 München (DE)**

(54) **Cylinder head with countersink**

(57)     Cylinder head (1) of a static spark-ignited gas engine with at least two exhaust ports (7.1, 7.1') and at least two inlet ports (1.1, 1.1') which runs to a bottom side (1.3) of the cylinder head (1), the cylinder head (1) having at least one cylinder axis (9) and each inlet port (1.1, 1.1') having a valve seat (2, 2') for inlet valves, each of said valve seats (2, 2') having a center axis (2.1, 2.1'), with at least one inlet port (1.1, 1.1') having a countersink (3, 3') in the border area of the bottom side (1.3) of the cylinder head (1), said countersink (3, 3') having an offset axis (3.1, 3.1') shifted from said center axis (2.1, 2.1') effecting a swirl flow, wherein a radius RF, RF′ of said countersink (3, 3') has a point M, M′, said point M, M' being a radial maximum with reference to the center axis (2.1, 2.1'), wherein that said radius RF, RF′ and a straight line MG, MG′ include an angle φ, said straight line MG, MG′ connecting said cylinder axis (9) with said center axis (2.1, 2.1') of said valve seat (2, 2') of said inlet port (1.1, 1.1'), wherein said angle φ fulfills the following condition: $70° \Leftarrow φ <= 110°$.

Procedure for manufacturing a cylinder head (1) of a static spark-ignited gas engine according to one of the claims before, in which a cutting tool (6) is used for manufacturing the countersink (3, 3'), the cutting tool (6) having a tool axis (6.1) and a cone angle $α$, said tool (6) being engaged with the inlet port (1.1, 1.1') for shaping the countersink (3, 3'), said tool axis (6.1) being inclined to said center axis (2.1, 2.1') about a set angle $β$, said cone angle $α$ being between 45° and 70° and said set angle $β$ being between 2° and 5°.

Fig. 1

**Description**

The present invention relates to a cylinder head of a static spark-ignited gas engine with at least two exhaust ports and at least two inlet ports which runs to a bottom side of the cylinder head, the cylinder head having at least one cylinder axis and each inlet port having a valve seat for inlet valves, each of said valve seats having a center axis, with at least one inlet port having a countersink in the border area of the bottom side of the cylinder head, said countersink having an offset axis shifted from said center axis effecting a swirl flow, wherein a radius RF, RF' of said countersink has a point M, M', said point M, M' being a radial maximum with reference to the center axis.

The combustion process in an engine is decisively influenced by the flow in the cylinder. A distinction is made here between macroscopic flow (swirl, tumble) and microscopic flow (turbulence). Swirl is a turbulent flow that has an axis of rotation parallel to the cylinder axis, tumble is a turbulent flow that has an axis of rotation perpendicular to the cylinder axis.

Spark-ignited gas engines typically use a swirl-type combustion process. The swirl is mostly generated by a combination of tangential and spiral inlet ports. The tangential inlet port is arranged such that the gas-air mixture flows into the cylinder tangentially to the cylinder axis and is conducted along the cylinder wall. This generates a rotation of the charge. However, large valve lifts are required to generate a pronounced swirl level. The operating principle of the spiral inlet port is based on generating a swirl in a helical inlet port that continues inside the cylinder. The disadvantages of a spiral inlet port include poor cylinder charge due to high flow losses and the considerable design effort.

The prior art solution, a combination of tangential and spiral inlet ports, generates a certain swirl level that may deviate from the optimum. A solution for fine tuning the swirl level is sought that can be implemented without a great design effort and the associated re-design of the cylinder head.

EP 1 167 700 B1 discloses a valve device of an internal combustion diesel engine including two suction valves and two exhaust valves arranged in a cylinder head, said suction valves having respective axes directed parallel with a cylinder axis, wherein an edge part at a suction air outlet end of a valve seat of each of said suction valves is expanded in a direction along a swirl stream within a combustion chamber of said engine, wherein said edge part at the suction air outlet end of the valve seat of each of the suction valves is expanded so as to extend over a half circumference about an offset axis shifted from said axis of the suction valve.

EP 1 493 910 A1 discloses a cylinder head for an internal combustion engine, comprising a first inlet duct which extends from a first inlet port to a first outlet port, and a second conduit inlet which extends from a second inlet port to a second outlet port and wherein the first and second inlet ducts are shaped so that the gas flow forms a swirling motion around the main axis of the combustion chamber, wherein at least the edge of the first outlet port of the first inlet duct comprises a notched portion extending over an arc located downstream of the main axis of the outlet orifice, relative to the swirling motion, the notched portion is generally crescent-shaped symmetrical about an axis (C) passing through the center of the outlet orifice associated and which is oriented tangentially to the vortical motion.

The object of the invention is to configure and arrange a cylinder head of a static spark-ignited gas engine in such a manner that a more intense swirling motion is generated in the cylinder.

According to the invention, the aforesaid object is achieved, in that said radius RF, RF' and a straight line MG, MG' include an angle $\phi$, said straight line MG, MG' connecting said cylinder axis with said center axis of said valve seat of said inlet port, wherein said angle $\phi$ fulfills the following condition: $70° <= \phi <= 110°$.

A more intense swirling motion in the cylinder is achieved by providing eccentric countersinks underneath the two inlet ports. The orientation of these countersinks is such that a rotation of the charge in the cylinder is generated that reinforces the swirling motion generated in the inlet ports. The countersinks of chamfers will hereinafter be referred to as 'swirl countersinks'.

One characteristic is the orientation of said swirl countersinks towards the cylinder wall at the angle $\phi$ mentioned above such that a swirling motion is generated through interaction with the curvature of the cylinder wall. It is advantageous if the countersink is at a specific minimum distance from the cylinder wall so that the flow to be introduced or the air-gas mixture, respectively, will not run against the cylinder wall.

The function of the swirl countersinks can be described in more detail as follows. The swirl countersinks are predominantly effective with small valve lifts, that is, when the valves open and close, since the outflow from the inlet port is forced towards the countersink in this valve position. This results in a high peripheral speed component that translates into a high swirl number in the lower valve area. If the valve lift is large, the outflow from the inlet port primarily flows along the valve axis and is hardly influenced by the countersink.

The swirl countersink is only possible with a valve recess, i.e. if the valve head is not flush with the cylinder head bottom but somewhat sunk into it.

The advantages of swirl countersinks include the following. The countersinks effect improved combustion which may manifest itself in increased efficiency, improved lean-mixture driveability, reduced knocking tendency, reduced spontaneous ignition tendency, and improved cylinder-specific control.

The efficiency of the measure is good, the motion of the charge is considerably increased without unacceptable impairment of the delivery ratio. The countersink can be introduced into series production without requiring any other re-designing of the cylinder head. The eccentric countersink can be implemented at almost no extra manufacturing costs.

It can also be advantageous if $\phi$ = 90° or 80° <= $\phi$ <= 100°.

Another increase in swirl flow is achieved if both inlet ports have a countersink, wherein an angle $\phi'$ between said radius RF' and said straight line MG' fulfills the following condition: 70° <= $\phi'$ <= 110°, said radius RF being directed to the adjacent exhaust port and said radius RF' being directed to the adjacent inlet port, both with reference to a circumferential direction U of the cylinder axis.

It can also be advantageous if 80° <= $\phi'$ <= 100° or $\phi'$ = 90°. These angles have proven to be very good.

According to the invention, either just one inlet port or both inlet ports comprise a swirl countersink. At least the inlet port can be designed as a tangential port such that the flow into the combustion chamber occurs in tangential direction to the central axis of the cylinder. The swirl countersinks then support or boost this tangential flow.

One of the two inlet ports may be designed as a spiral port that generates at least a local swirling motion that is limited to the area of the respective inlet port. The countersink can expand the latter to the entire combustion chamber.

Advantageously, an eccentricity E between said offset axis and said center axis may fulfill the following condition: 0.005 <= $E/O_{Cyl}$ <= 0.05, wherein $O_{Cyl}$ is the diameter of a combustion chamber wall, said chamber wall being in part composed of said bottom side of the cylinder head. The eccentricity E of the swirl countersinks helps achieve a considerable intensification of the swirl without unacceptably impairing the throughput of the inlet ports. The eccentricity E should not be selected too large, considering the distance to the cylinder wall.

It can further be advantageous if the ratio of eccentricity E to the diameter of a combustion chamber wall is 0.01 <= $E / D_{Cyl}$ <= 0.04.

It can also be advantageous if $|\phi| = |\phi|$ or $|\phi-\phi'|$ <= 20 ° or $|\phi-\phi'|$ <= 15°. The two angles may deviate from one another by up to 20° without the occurrence of drastic disadvantages for the flow. It is preferred that they are of about equal size.

Furthermore, a procedure for manufacturing a cylinder head of a static spark-ignited gas engine as described above can be advantageous wherein a cutting tool is used for manufacturing the countersink, the cutting tool having a tool axis and a cone angle $\alpha$, said tool being engaged with the inlet port for shaping the countersink, said tool axis being inclined to said center axis about a set angle $\beta$, said cone angle $\alpha$ being between 45° and 70° and said set angle $\beta$ being between 2° and 5°. This combination has proven to be very advantageous.

The advantages according to the invention were also achieved using a static spark-ignited gas engine with a cylinder head as described above.

A particularly high swirl flow is achieved if there is at least one piston, said piston having a piston axis and a pot-like piston crown bowl. If the pot-shaped piston crown bowl is placed coaxial to piston axis, there are symmetrical conditions, especially concerning a squish current, generated between the piston crown bowl and a border of the piston. The swirl flow generated on the inlet side can be particularly optimally utilized for combustion in a spark-ignited gas engine if the engine comprises the squish current generating piston crown bowl described above.

Excellent results are achieved if a diameter d5 of said piston crown bowl is between 40 % and 60 % or between 45 % and 56 % of $D_{Cyl}$, wherein $D_{Cyl}$ is the diameter of the combustion chamber wall, said chamber wall being in part composed of said bottom side of the cylinder head.

It can further be advantageous if there is a spark plug with a pre-chamber, i.e. a pre-chamber spark plug or a chamber plug. It may happen that the center flame between the spark plug electrodes is blown out by increased swirl flow and squish current. But this can be avoided by using said chamber plug. The chamber plug shields the ignition site from the current in the combustion chamber and creates its own defined ignition conditions. A high swirl flow and squish current primarily affects combustion in the main combustion chamber and not the sensitive ignition phase in the spark plug pre-chamber. No limits are therefore set for a more intense movement of the charge in the combustion chamber.

It can also be advantageous if there is a place p of external carburation of gas and air, said place p being upstream of said valve seat. The swirl flow just has to ensure distribution in the combustion chamber. The gas-air mixture is already mixed when it enters the combustion chamber.

Also advantageous is a procedure for running a static spark-ignited gas engine as describes before, in which a high scavenging pressure $\Delta p_{E-A}$ is applied, wherein $\Delta p_{E-A}$ fulfills the following condition: 500 mbar <= $\Delta p_{E-A}$ <= 1000 mbar. A high scavenging pressure drop between inlet and exhaust ports is advantageous for static charged gas engines. This ensures that a strong flow is generated when the inlet valves are opened until the pressure ratio has balanced. The swirl countersinks have a particularly strong effect in this case.

A good swirl flow is achieved if a Miller valve timing, i.e. Miller cycle timing is applied, in which a crankshaft angle KW at the time the inlet valves nearly close fulfills the following condition: KW >= 20° before BDC, with a valve lift of 1 mm. In gas engines with Miller valve timing, the inlet valves already close while the piston is still moving towards the bottom dead center. This once again creates a strong flow in the inlet port outlets when the valves are closing. This is why the combination of the swirl countersinks and Miller valve timing is particularly effective.

In summary, optimum effect of the swirl countersinks and improvement of the combustion process in a charged spark-ignited gas engine are ensured by a high scavenging pressure drop, use of Miller valve timing, a squish current generating piston crown bowl, and/or a chamber plug.

Other advantages and details of the invention are explained in the claims and in the description and shown in the figures in which:

Figure 1 shows a schematic diagram of a cylinder head with swirl countersinks;

Figure 2 shows a cross-section of view II-II from Fig. 1;

Figure 3 shows a lateral view of the piston;

Figure 4 shows a schematic diagram of a spark-ignited internal combustion engine with a piston, a crankshaft and a camshaft.

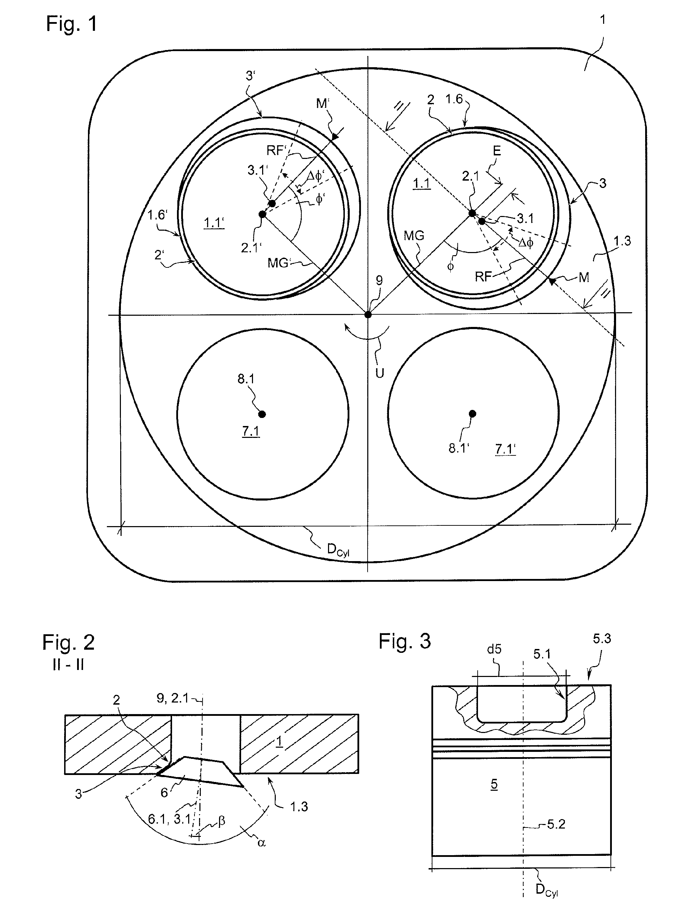

The cylinder head 1 shown in Fig. 1 comprises two inlet ports 1.1, 1.1' and two exhaust ports 7.1, 7.1'. The respective ports 1.1-7.1' open into the bottom side 1.3 of the cylinder head 1, whose diameter $D_{Cyl}$ corresponds to the diameter of a combustion chamber 10.3 not shown here and caps this combustion chamber 10.3.

The respective inlet port 1.1, 1.1' comprises a valve seat 2, 2' and a center axis 2.1, 2.1' that corresponds to a valve axis not shown here. The respective inlet port 1.1, 1.1' comprises a countersink 3, 3' in a border area 1.6, 1.6' between the inlet port 1.1, 1.1' and said bottom side 1.3. The respective countersink 3, 3' comprises a offset axis 3.1, 3.1' that is offset at a spacing in radial direction from the center axis 2.1, 2.1'. The spacing thus defines an eccentricity E on the countersink 3, 3' with reference to the center axis 2.1, 2.1' of the valve seat 2, 2'.

The countersink 3, 3' thus formed has the shape of a sickle and comprises a point M that constitutes the maximum distance from the center axis 2.1, 2.1'. A straight line connecting the center axis 2.1, 2.1' and the point M, M' will hereinafter be called the radius RF.

The bottom side 1.3 of the cylinder head 1 comprises a center axis that forms the cylinder axis 9. A straight line connecting the cylinder axis 9 and the respective center axis 2.1, 2.1' will hereinafter be called the straight line MG.

The respective radius RF, RF' and the respective straight line MG, MG' include an angle $\phi$, $\phi'$, said $\phi$, $\phi'$ being plotted counterclockwise from the straight line MG, MG' such that the first countersink 3 or the radius RF is located with reference to the straight line MG on the side of the adjacent exhaust port 7.1 while the connecting radius RF' is located with reference to the straight line MG' on the side of the adjacent inlet port 1.1. Thus the respective radius RF, RF' is arranged tangentially with reference to a peripheral direction U of the round bottom side 1.3 reflecting the cylinder shape.

Both angles $\phi$, $\phi'$ may have an angle variation $\Delta\phi$, $\Delta\phi'$ of up to 20°. It is preferred that the angle $\phi$, $\phi'$ is 90°.

The gas flow entering the inlet port 1.1, 1.1' through a lesser open valve is diverted by the countersink 3, 3' in the peripheral direction U.

The respective exhaust port 7.1, 7.1' comprises a center axis 8.1, 8.1' of seats for outlet valves not shown here.

The cylinder head 1 according to Fig. 1 is intended for a single cylinder. It is possible within the scope of the invention to design a cylinder head 1 with multiple bottom sides 1.3, each of which capping a cylinder or combustion chamber 10.3.

The cross sectional view II-II according to Fig. 2 shows the area of the inlet port 1.1 with the center axis 2.1 which is congruent with the cylinder axis 9 with reference to the alignment shown. To produce the countersink 3, a countersinking tool 6 is used like a milling tool which is inclined about a set angle $\beta$ to the center axis 2.1 with reference to a tool axis 6.1. The countersinking tool 6 itself comprises a cone angle $\alpha$. The eccentricity E mentioned above results from the inclination of the countersinking tool 6 about the set angle $\beta$, as can be seen in Fig. 2. Alternatively, the countersinking tool 6 can be positioned without an inclination about a set angle $\beta$, just by placing it at an offset to the center axis 2.1 corresponding to the eccentricity E, wherein the tool axis 6.1 is parallel to the center axis 2.1.

In accordance with Fig. 3, the piston 5 used in the spark-ignited gas engine comprises a piston crown bowl 5.1 that is pot-shaped. The piston crown bowl 5.1 has a diameter d5 that is about 50 % of a piston diameter $D_{Cyl}$. The piston crown bowl 5.1 is arranged coaxially with reference to the piston axis 5.2. This results in a piston border 5.3, the width of which being about 25 % of the diameter $D_{Cyl}$ if the diameter d5 is as mentioned above.

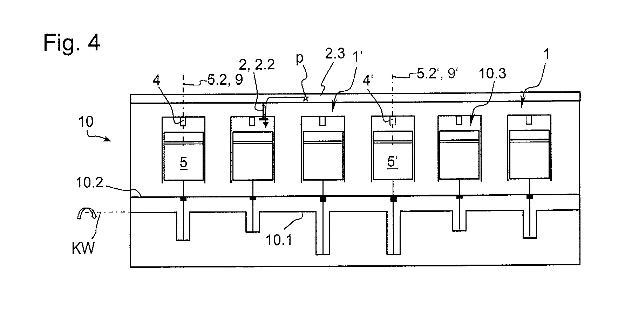

According to Fig. 4, the spark-ignited gas engine 10 shown here in a schematic view comprises multiple pistons 5, 5' with piston axis 5.2, 5.2' guided in multiple individual cylinders with cylinder heads 1, 1' that define a combustion chamber 10.3 together with the respective cylinder or cylinder head 1. A spark plug 4, 4' designed as a chamber plug is located in the combustion chamber 10.3 where it is typically placed symmetrically to the piston axis 5.2 or the cylinder axis 9, 9'. The second cylinder head 1 in Fig. f shows an example of an inlet valve 2.2 via which a fuel-air mixture can enter the combustion chamber 10.3. The fuel-air mixture is mixed inside a common intake pipe (central feed and mixing line) 2.3. A place p of external cooperation is within the common intake pipe 2.3. Valve timing is performed or applied by a respective camshaft 10.2 by respectively capturing the crankshaft angle KW of a crankshaft 10.1.

Reference list

| | |
|---|---|
| 1 | cylinder head |
| 1' | cylinder head |
| 1.1 | inlet port |
| 1.1' | inlet port |
| 1.3 | bottom side |
| 1.6 | border area |
| 1.6' | border area |
| 2 | valve seat |
| 2' | valve seat |
| 2.1 | center axis |
| 2.1' | center axis |
| 2.2 | inlet valve |
| 2.3 | common intake pipe (central feed and mixing line) |
| 3 | countersink |
| 3' | countersink |
| 3.1 | offset axis |
| 3.1' | offset axis |
| 4 | spark plug with pre-chamber, chamber plug |
| 4' | spark plug with pre-chamber, chamber plug |
| 5 | piston |
| 5' | piston |
| 5.1 | crown bowl |
| 5.2 | piston axis |
| 5.2' | piston axis |
| 5.3 | piston border |
| 6 | cutting tool, countersinking tool |
| 6.1 | tool axis |
| 7.1 | exhaust port |
| 7.1' | exhaust port |
| 8.1 | center axis |
| 8.1' | center axis |
| 9 | cylinder axis, center axis |
| 9' | cylinder axis, center axis |
| 10 | gas engine |
| 10.1 | crankshaft |
| 10.2 | camshaft |
| 10.3 | combustion chamber |
| $D_{Cyl}$ | diameter of a combustion chamber wall |
| d5 | diameter of crown bowl |
| E | eccentricity, distance |
| KW | crankshaft angle |
| M | point, maximum |
| M' | point, maximum |
| MG | straight line |
| MG' | straight line |
| p | place of external carburation |
| RF | radius |
| RF' | radius |
| U | direction |
| α | cone angle |
| β | set angle |
| $\Delta p_{E-A}$ | scavenging pressure |

$\phi$          angle
$\phi'$          angle
$\Delta\phi$        angle variation
$\Delta\phi'$        angle variation

## Claims

1. Cylinder head (1) of a static spark-ignited gas engine with at least two exhaust ports (7.1, 7.1') and at least two inlet ports (1.1, 1.1') which runs to a bottom side (1.3) of the cylinder head (1), the cylinder head (1) having at least one cylinder axis (9) and each inlet port (1.1, 1.1') having a valve seat (2, 2') for inlet valves, each of said valve seats (2, 2') having a center axis (2.1, 2.1'), with at least one inlet port (1.1, 1.1') having a countersink (3, 3') in the border area of the bottom side (1.3) of the cylinder head (1), said countersink (3, 3') having an offset axis (3.1, 3.1') shifted from said center axis (2.1, 2.1') effecting a swirl flow, wherein a radius RF, RF' of said countersink (3, 3') has a point M, M', said point M, M' being a radial maximum with reference to the center axis (2.1, 2.1'), **characterized in that** said radius RF, RF' and a straight line MG, MG' include an angle $\phi$, said straight line MG, MG' connecting said cylinder axis (9) with said center axis (2.1, 2.1') of said valve seat (2, 2') of said inlet port (1.1, 1.1'), wherein said angle $\phi$ fulfills the following condition:

$$70° <= \phi <= 110°.$$

2. Cylinder head according to claim 1, wherein

$$80° <= \phi <= 100°$$

   or

$$\phi = 90°.$$

3. Cylinder head according to claim 1 or 2, wherein both inlet ports (1.1, 1.1') have a countersink (3, 3'), wherein an angle $\phi'$ between said radius RF' and said straight line MG' fulfills the following condition:

$$70° <= \phi' <= 110°,$$

   said radius RF being directed to the adjacent exhaust port (7.1') and said radius RF' being directed to the adjacent inlet port (1.1'), both with reference to a circumferential direction U of the cylinder axis (9).

4. Cylinder head according to claim 3, wherein

$$80° <= \phi' <= 100°$$

   or

$$\phi' = 90°.$$

5. Cylinder head according to one of the claims 1 to 4, wherein an eccentricity E between said offset axis (3.1, 3.1') and said center axis (2.1, 2.1') fulfills the following condition: $0.005 \leq E/D_{Cyl} \leq 0.05$, wherein $D_{Cyl}$ is the diameter of a combustion chamber wall, said chamber wall being in part composed of said bottom side (1.3) of the cylinder head (1).

6. Cylinder head according to claim 1 to 5, wherein

$$0.01 \leq E/D_{Cyl} \leq 0.04.$$

7. Cylinder head according to claim 6, wherein

$$|\phi| = |\phi'| \ \text{or} \ |\phi - \phi'| \leq 20° \ \text{or} \ |\phi - \phi'| \leq 15°.$$

8. Procedure for manufacturing a cylinder head (1) of a static spark-ignited gas engine according to one of the claims before, in which a cutting tool (6) is used for manufacturing the countersink (3, 3'), the cutting tool (6) having a tool axis (6.1) and a cone angle $\alpha$, said tool (6) being engaged with the inlet port (1.1, 1.1') for shaping the countersink (3, 3'), said tool axis (6.1) being inclined to said center axis (2.1, 2.1') about a set angle $\beta$, said cone angle $\alpha$ being between 45° and 70° and said set angle $\beta$ being between 2° and 5°.

9. Static spark-ignited gas engine (10) with a cylinder head (1) according to one of the claims 1 to 8.

10. Static spark-ignited gas engine (10) according to claim 9, with at least one piston (5), said piston (5) having a piston axis (5.2) and a pot-like piston crown bowl (5.1).

11. Static spark-ignited gas engine (10) according to claim 9 or 10, wherein a diameter d5 of said piston crown bowl (5.1) is between 40 % and 60 % of $D_{Cyl}$, wherein $D_{Cyl}$ is the diameter of the combustion chamber wall, said chamber wall being in part composed of said bottom side (1.3) of the cylinder head (1).

12. Static spark-ignited gas engine (10) according to claim 9, 10 or 11 having a pre-chamber spark plug (4).

13. Static spark-ignited gas engine (10) according to claim 9, 10, 11 or 12 having a place p of external carburation of gas and air, said place p being upstream of said valve seat (2).

14. Running a static spark-ignited gas engine (10) according to one of the claims 9 to 13, in which a high scavenging pressure $\Delta p_{E-A}$ is applied, wherein $\Delta p_{E-A}$ fulfills the following condition:

$$500 \ \text{mbar} \leq \Delta p_{E-A} \leq 1000 \ \text{mbar.}$$

15. Procedure according to claim 14, in which a Miller cycle timing is applied, in which a crankshaft angle KW at the time the inlet valves nearly close fulfills the following condition: $KW \geq 20°$ before BDC, with a valve lift of 1 mm.

## Fig. 1

## Fig. 2
II - II

## Fig. 3

## Fig. 4

EP 2 698 508 A1

Europäisches
Patentamt
European
Patent Office
Office européen
des brevets

# EUROPEAN SEARCH REPORT

**Application Number**

EP 12 18 0846

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | EP 1 167 700 B1 (HONDA MOTOR CO LTD [JP]) 19 January 2005 (2005-01-19) * paragraphs [0014], [0016] - [0019] * ----- | 1-15 | INV. F01L3/06 F02B31/00 F02F1/42 |
| X,D | EP 1 493 910 A1 (RENAULT SA [FR]) 5 January 2005 (2005-01-05) * paragraph [0030] - paragraph [0034] * ----- | 1-15 | ADD. F02B23/10 |
| A | FR 2 890 119 A1 (RENAULT SAS [FR]) 2 March 2007 (2007-03-02) * page 6, line 29 - page 7, line 26 * ----- | 1 | |
| A | US 5 870 993 A (STELLET HANS-PETER [DE] ET AL) 16 February 1999 (1999-02-16) * column 2, line 43 - line 47; figures 2,3 * * column 4, line 38 - line 58 * ----- | 1 | |

TECHNICAL FIELDS
SEARCHED      (IPC)

F01L
F02B
F02F

The present search report has been drawn up for all claims

| Place of search | Date of completion of the search | Examiner |
|---|---|---|
| Munich | 25 January 2013 | Coniglio, Carlo |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

10

**ANNEX TO THE EUROPEAN SEARCH REPORT
ON EUROPEAN PATENT APPLICATION NO.**

EP 12 18 0846

This annex lists the patent family members relating to the patent documents cited in the above-mentioned European search report.
The members are as contained in the European Patent Office EDP file on
The European Patent Office is in no way liable for these particulars which are merely given for the purpose of information.

25-01-2013

| Patent document cited in search report | | Publication date | Patent family member(s) | | Publication date |
|---|---|---|---|---|---|
| EP 1167700 | B1 | 19-01-2005 | DE 60108449 D1<br>DE 60108449 T2<br>EP 1167700 A2<br>JP 2002004821 A | | 24-02-2005<br>23-06-2005<br>02-01-2002<br>09-01-2002 |
| EP 1493910 | A1 | 05-01-2005 | EP 1493910 A1<br>FR 2856743 A1 | | 05-01-2005<br>31-12-2004 |
| FR 2890119 | A1 | 02-03-2007 | NONE | | |
| US 5870993 | A | 16-02-1999 | EP 0814245 A1<br>JP 10068323 A<br>US 5870993 A | | 29-12-1997<br>10-03-1998<br>16-02-1999 |

EPO FORM P0459

For more details about this annex : see Official Journal of the European Patent Office, No. 12/82

**EP 2 698 508 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1167700 B1

- EP 1493910 A1